# EUROPÄISCHE PATENTSCHRIFT

(11) **EP 1 940 947 B1**
(45) Veröffentlichungstag und Bekanntmachung des Hinweises auf die Patenterteilung: **07.10.2009**
(21) Anmeldenummer: 06792861.4
(22) Anmeldetag: 17.08.2006
(51) Int. Cl.: C08L 33/00, C09D 133/00

(54) **SPRITZBARE AKUSTIKMASSEN**
SPRAYABLE ACOUSTIC COMPOSITIONS
MASSES ACOUSTIQUES PULVÉRISABLES

(30) Priorität: 28.10.2005 DE 102005052130
(43) Veröffentlichungstag der Anmeldung: 09.07.2008
(73) Patentinhaber: Evonik Röhm GmbH, 64293 Darmstadt (DE)
(72) Erfinder: SCHATTKA, Jan Hendrik, 63454 Hanau (DE); LÖHDEN, Gerd, 45136 Essen (DE); JUNG, Herbert, 63791 Karlstein (DE); MATTHESS, Florian, 63776 Mömbris (DE); ZMARZLY, Rebecca, 63549 Ronneburg (DE)
(86) Internationale Anmeldenummer: PCT/EP2006/065382
(87) Internationale Veröffentlichungsnummer: WO 2007/048647

(56) Entgegenhaltungen:
- EP-A1- 1 277 823
- EP-A1- 1 484 347
- EP-A1- 1 500 690
- EP-A2- 0 456 473
- WO-A-91/11489
- US-A- 4 859 742

## Beschreibung

Die Erfindung betrifft spritzbare Akustikmassen, Verfahren zur Herstellung und Verwendungen.

In Schwingungen versetzte Oberflächen strahlen Schall ab. Dies kann durchaus erwünscht sein, etwa im Falle von Musikinstrumenten; es kann jedoch auch störend empfunden werden, vor allem wenn dieser Schall als Lärm wahrgenommen wird.

So werden zum Beispiel Bleche der Karosserie von Automobilen durch den Motor, den Straßenbelag oder Steinschlag zu Schwingungen angeregt, die im Fahrzeuginnenraum als Dröhnen wahrgenommen werden.

Um diese unerwünschten Blechschwingungen zu dämpfen werden in der Automobilindustrie oftmals Bitumenmatten auf die Bleche aufgebracht. Während es dadurch gelingt die Geräuschbelastung im Innenraum effektiv zu dämpfen, birgt diese Methode zugleich eine ganze Reihe von Nachteilen:

Die Bitumenmatten müssen für jede Oberfläche in der richtigen Form zugeschnitten bevorratet werden; wenn jedoch für verschiedene Fahrzeugmodelle jeweils mehrere Mattenformen bereit gehalten werden müssen, so stellt dies eine Herausforderung an Logistik und Lagerhaltung dar.

Das Aufkleben der Matten geschieht in Handarbeit, was naturgemäß zu Qualitätsschwankungen führt.

Zudem ist Bitumen unter toxikologischen Gesichtspunkten nicht unumstritten.

Für den Ersatz solcher Bitumenmatten sind seit einigen Jahren spritz- oder extrudierbare Massen im Gespräch, die den Bitumenmatten in vielerlei Hinsicht überlegen sind.

Solche, mit Robotern applizierten Massen lassen sich auch auf komplex geformte oder gebogene Bleche ohne Schwierigkeiten aufzutragen. Anpassungen an geänderte Anforderungen oder Modellwechsel sind sehr leicht möglich.

Durch Automatisierung kann eine Verringerung der Handarbeit und eine Verbesserung der Prozeßqualität erreicht werden.

Solche Massen sind bereits beschrieben worden und werden zum Teil auch schon in geringen Mengen bei der Automobilproduktion eingesetzt. Zu einem Durchbruch sind solche Materialien bisher jedoch noch nicht gelangt, da alle bisher vorgeschlagenen Systeme Nachteile besitzen, die ihre Umsetzung behindern.

Zum einen sind Materialien auf Basis von PVC oder chlorierten Thermoplasten vorgeschlagen worden, wie beispielsweise als Plastisol in EP 0456473 oder

EP 766714 oder als heiß zu verarbeitende Masse in EP 1277823. Chlorhaltige Kunststoffe sind jedoch aus ökologischen Gründen unvorteilhaft, da sie beim Verbrennen HCl und hochgiftige Dioxine bilden können, was vor allem auch Nachteile beim Recycling mit sich bringt. Bei den in EP 1277823 offenbarten Massen ist zudem die Notwendigkeit der heißen Verarbeitung nachteilig.

Weiterhin sind wässrige Dispersionen beschrieben worden, die beim Trocknen einen Film geben, der die gewünschte dämpfende Eigenschaft aufweist; Solche Materialien sind zum Beispiel in den Offenlegungen EP 1457530 und

EP 1520865 beschrieben. Gerade bei dickeren Schichten, wie sie für eine gute Dämpfungswirkung notwendig sind, sind hierbei jedoch lange Trocknungszeiten erforderlich, um das Wasser aus der aufgespritzten Schicht zu entfernen. Verbunden damit ist die Gefahr der unerwünschten Bildung von Blasen, besonders bei einer Beschleunigung des Trocknungsvorganges.

Massen auf Basis von Epoxidharzen sind ebenfalls vielfach vorgeschlagen worden; Beispiele sind die Offenlegungen EP 0407157, EP 1023413 und

EP 1500690. Die Bestandteile solcher Harze sind jedoch nicht unbedenklich und oftmals allergisierend oder gar mutagen und carcinogen. Da solche Beschichtungen oft sehr hart und spröde sind, sind sie für den Außenbereich meist nicht geeignet. Auch die Reparatur im Falle von Beschädigungen ist bei diesem Material sehr schwierig.

Schließlich sind auch Plastisole mit Bindemitteln auf (Meth)acrylatbasis beschrieben worden, wie etwa in EP 0702708 oder in EP 1090067.

Dabei steht die Schreibweise (Meth)acrylat hier und im folgenden sowohl für die Ester der Methacrylsäure als auch für die Ester der Acrylsäure sowie auch für Mischungen aus beiden. Beispiele solcher Monomere sind Methylmethacrylat, Butylmethacrylat, Hydroxyethylmethacrylat, Ethylacrylat und Butylacrylat.

Der Begriff (Meth)acrylat-Plastisole wird im folgenden zur Beschreibung von Plastisolen verwendet, deren polymere Bestandteile zu einem wesentlichen Teil aus (Meth)acrylaten bestehen.)

Solche (Meth)acrylat-Plastisole erfordern jedoch recht hohe Gehalte an Weichmachern, um eine ausreichende Verarbeitbarkeit zu gewährleisten. Diese können jedoch, gerade bei Neufahrzeugen, in begrenztem Maße aus der Beschichtung ausdünsten. Bei einem Einsatz solcher Plastisole im Fahrzeuginnenraum führt dies zu verstärktem Fogging, d.h. dem Abscheiden dieser Ausdünstungen auf den Fahrzeugscheiben. Das Fogging ist unerwünscht und störend, da dadurch die Durchsicht durch die Scheiben, besonders bei Sonneneinstrahlung oder anderen Blendeinwirkungen, beeinträchtigt wird.

Daher bestand die Aufgabe darin, ein Material zur Vibrationsdämpfung zur Verfügung zu stellen, dass alle im Stand der Technik aufgezeigten Nachteile ausschließt. Es bestand weiterhin die Aufgabe in der Verbesserung vorhandener Plastisol-Materialien. Es sollen Plastisole zur Verfügung gestellt werden, die weniger flüchtige Bestandteile enthalten, die für das Fogging verantwortlich sind.

Gelöst werden diese sowie weitere nicht explizit genannte Aufgaben, die jedoch aus den hierin einleitend diskutierten Zusammenhängen ohne weiteres ableitbar oder erschließbar sind, durch eine Plastisol-Formulierung, enthaltend
a) 1-60 Gew.-% Oligomere mit einem Molekulargewicht kleiner 20.000 g/mol, die zu mindestens 30 Gew.-% (Meth)acrylate enthalten
b) 0-60 Gew.-% Lösungsmittel für die Oligomere a),
c) 5-60 Gew.-% pulverförmige Polymere mit einem Molekulargewicht größer 100.000 g/mol und dass mindestens eines der Polymere zu über 60 Gew.-% aus (Meth)acrylaten besteht sowie
d) weitere Füll-, Hilfs- und/oder Zusatzstoffen, wobei die Komponenten a) bis c) mindestens 20% der Formulierung ausmachen. Bevorzugt machen die Komponenten a) bis c) 40 % der Formulierung aus.

Es wurde gefunden, dass durch den Ersatz der Gesamtmenge oder eines Teils des üblicherweise in Plastisolen verwendeten Weichmachers durch Oligomere, insbesondere (Meth)acrylat-Oligomere, das "Fogging" verringert werden kann.

Die erfindungsgemäßen Formulierung weisen eine hervorragende Verarbeitbarkeit auf.

Überraschend wurde gefunden, dass zudem eine deutliche Verbesserung des Dämpfungseigenschaften der Beschichtung beobachtet werden kann.

Die Anforderung flexibel auf verschiedene Oberflächenformen und Krümmungen eingehen zu können wird mit dem Einsatz von (Meth)acrylat-Plastisolen erfüllt; dadurch wird auch eine optimierte Lagerhaltung der Dämpfungsmaterialien ermöglicht.

Die Oligomere a) umfassen Monomerzusammensetzungen die sowohl aus verschiedenen Monomerarten zusammengesetzt sein können, als auch entsprechend den Verteilungskurven verschiedene Kettenlängen umfassen.

Die Oligomere a) haben ein Molekulargewicht M_{w} < 20.000 g/mol, bevorzugt ein Molekulargewicht < 10.000 g/mol, besonders bevorzugt ein Molekulargewicht < 5.000 g/mol und enthalten mindestens 30 Gew.-% (Meth)acrylate, besonders bevorzugt mindestens 60 Gew.-% (Meth)acrylate.

Die Oligomere a) sind bevorzugt ausgewählt aus der Gruppe der (Meth)acrylate wie beispielsweise Alkyl(meth)acrylate von gradkettigen, verzweigten oder cycloaliphatischen Alkoholen mit 1-22 C-Atomen, wie zum Beispiel Methyl(meth)acrylat, Ethyl(meth)acrylat, n-Butyl(meth)acrylat, i-Butyl(meth)acrylat, t-Butyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat, Aryl(meth)acrylate wie zum Beispiel Benzyl(meth)acrylat oder Phenyl(meth)acrylat die jeweils unsubstituiert oder 1-4-fach substituierte Arylreste aufweisen können, Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat, Poly(propylenglycol)methylether(meth)acrylat, Styrol und substituierte Styrole, wie zum Beispiel 4-Vinylbenzoesäure.

Die erfindungsgemäßen Oligomere müssen keinerlei reaktive Gruppen aufweisen, da ihre Rolle in der verarbeitbaren Form der Formulierung die eines Lösungsmittels und in der ausgelierten Form die eines Bindemittels ist.

In speziellen Ausführungsformen kann es jedoch von Vorteil sein physikalische Eigenschaften der Oligomere, wie etwa der Hydrophilie oder der Polarität, durch den Einbau zusätzlicher funktioneller Gruppen zu verändern; als Beispiele sind Hydroxylgruppen (z.B. durch die Verwendundung von Hydroxyethylmethacrylat oder Hydroxypropylmethacrylat als Comonomeren), Säuregruppen (z.B. durch die Verwendundung von Acrylsäure oder Methacrylsäure oder Hydroxypropylmethacrylat als Comonomeren) oder Amidgruppen (z.B. durch die Verwendundung von Acrylamid oder Methacrylamid als Comonomeren) zu nennen.

Die Oligomere werden mit dem Fachmann bekannten Verfahren synthetisiert. Üblicherweise werden sie durch Lösungspolymerisation unter Einsatz von Kettenüberträgern dargestellt; typische Kettenüberträger sind Schwefelverbindungen wie Mercaptane (z.B. 1-Dodecanthiol, 1-Butanthiol, etc.). Für bestimmte Monomere können auch katalytische Kettenüberträger eingesetzt werden; solche CCT-Katalysatoren sind zum Beispiel Cobalt(II)-Komplexe mit Porphyrin- oder Glyoximliganden (z:B. 5,10,15,20-Tetrakis(4-methoxyphenyl)-21 H-23H-porphyrin-Cobalt(II), 2,3,7,8,12,13,17,18-Octaethyl-21H,23H-porphyrin-Cobalt(II), bis[(difluoroboryl) diphenylglyoxim]-Cobalt(II) oder bis[(difluoroboryl) diphenylglyoxim]-Cobalt(II) ). In den Fällen in denen dies möglich ist, ist die Verwendung von katalytischer Kettenüberträger besonders bevorzugt.

Die Formulierung kann sowohl mit Lösungsmitteln als auch lösungsmittelfrei dargestellt werden. Als Lösungsmittel kommen Flüssigkeiten oder Mischungen von Flüssigkeiten in Frage, die in der binären Mischung mit den jeweiligen Oligomeren in dem in der jeweiligen Formulierung beabsichtigten Mengenverhältnis eine optisch klare Lösung bilden, die auch nach 24 stündigem Stehen bei 20°C keine Trennung oder Phasenbildung zeigt.

Flüssigkeiten; die in dieser Mischung mit den Oligomeren sofort oder innerhalb von 24 Stunden eine Trübung zeigen, ohne daß sich jedoch eine der Komponenten absetzt oder aufrahmt, sind weniger bevorzugt, können aber in speziellen Ausführungsformen dennoch in Frage kommen.

Die folgenden Lösungsmittel seien besonders erwähnt, wobei die Liste beliebig weiter fortsetzbar ist und nicht einschränkend verstanden werden soll :

Ester der Phthalsäure, wie z.B. Diundecylphthalat, Diisodecylphthalat, Diisononylphthalat, Dioctylphthalat, Diethylhexylphthalat, Di-C7-C11-n-alkylphthalat, Dibutylphthalat, Diisobutylphthalat, Dicyclohexylphthalat, Dimethylphthalat, Diethylphthalat, Benzyloctylphthalat, Butylbenzylphthalat, Dibenzylphthalat und Trikresylphosphat, Dihexyldicaprylphthalat.

Hydroxycarbonsäureester, wie z.B. Ester der Zitronensäure (beispielsweise Tributyl-O-acetylcitrat, Triethyl-O-acetylcitrat), Ester der Weinsäure oder Ester der Milchsäure.

Aliphatische Dicarbonsäureester, wie z.B. Ester der Adipinsäure (beispielsweise Dioctyladipat, Diisodecyladipat), Ester der Sebacinsäure (beispielsweise Dibutylsebacat, Dioctylsebacat, Bis(2-ethylhexyl)-sebacat) oder Ester der Azelainsäure.

Ester der Trimellithsäure, wie z.B. Tris(2-ethylhexyl)trimellitat. Ester der Benzoesäure, wie z.B. Benzylbenzoat

Ester der Phosphorsäure, wie z.B. Trikresylphosphat, Triphenylphosphat, Diphenylkresylphosphat, Diphenyloctylphosphat, Tris(2-ethylhexyl)-phosphat, Tris(2-butoxyethyl)phosphat.

Alkylsulfonsäureester des Phenols oder des Kresols, Dibenzyltoluol, Diphenylether.

Bevorzugt werden Phthalate, Adipate, Phosphate oder Zitrate verwendet; wobei Phthalate besonders bevorzugt sind.

Weniger bevorzugt, aber in speziellen Ausführungen durchaus sinnvoll ist auch der Einsatz leichtflüchtiger Lösungsmittel wie niedrigsiedender Kohlenwasserstoffe oder deren Gemische (z.B. Petrolether). Der Einsatz leichtflüchtiger Lösungsmittel zielt insbesondere auf Außenanwendungen, beispielsweise im Unterbodenschutz, bei denen das Fogging keine Rolle spielt.

Die genannten und andere Lösungsmittel können auch als Mischungen eingesetzt werden.

Die Polymere c) weisen ein Molekulargewicht >100000 g/mol, bevorzugt >400000 g/mol auf. Diese Polymere können nach einem der dem Fachmann kannten Verfahren (wie radikalischer Polymerisation, anionischer Polymerisation, kationischer Polymerisation, Polyaddition oder Polykondensation). Bevorzugt ist die radikalische Polymerisation.

Dementsprechend können alle diesen Polyreaktionen zugänglichen Monomere - auch in Mischungen - verwendet werden. Bevorzugt sind ethylenisch ungesättigte Verbindungen, wie zum Beispiel (Meth)acrylate, Styrol und dessen Derivate, unverzweigte oder verzweigte Alkene, Vinylester und andere. (Meth)acrylate sind besonders bevorzugt.

Bevorzugt werden Verbindungen ausgewählt aus der Gruppe der Methyl(meth)acrylate, Ethyl(meth)acrylate, Propyl(meth)acrylate, Isopropyl(meth)acrylate, n-Butyl(meth)acrylate, Isobutyl(meth)acrylate, tert.-Butyl(meth)acrylate, 2-Ethylhexyl(meth)acrylate, Hexyl(meth)acrylate, Cyclohexyl(meth)acrylate, Pentyl(meth)acrylate, Heptyl(meth)acrylate, Octyl(meth)acrylate, 1,4-Butandiol(meth)acrylate, 2-Butoxyethyl(meth)acrylate, 2-Ethoxyethoxymethyl(meth)acrylate, 2-Ethoxyethyl(meth)acrylate, Tetrahydrofurfuryl(meth)acrylate, Vinyloxyethoxyethyl(meth)acrylate, Methoxyethoxyethyl(meth)acrylate, 1-Butoxypropyl(meth)acrylate, 1-Methyl-(2-vinyloxy)ethyl(meth)acrylate, Cyclohexyloxymethyl(meth)acrylate, Methoxymethoxyethyl(meth)acrylate, Benzyloxymethyl(meth)acrylate, Furfuryl(meth)acrylate, 2-Butoxyethyl(meth)acrylate, 2-Ethoxyethoxymethyl(meth)acrylate, β-Carboxyethylacrylate, 2-Ethoxyethyl(meth)acrylate, Allyloxymethyl(meth)acrylate, 1-Ethoxybutyl(meth)acrylate, Methoxymethyl(meth)acrylate, 1-Ethoxyethyl(meth)acrylate, Ethoxymethyl(meth)acrylate, 2,3-Epoxybutyl(meth)acrylate, 3,4-Epoxybutyl(meth)acrylate, Glycidyl(meth)acrylate, 2-(Dimethylphosphato)propyl(meth)acrylate, 2-(Ethylenphosphito)propyl(meth)acrylate, Dimethylphosphinomethyl(meth)acrylate, Dimethylphosphonoethyl(meth)acrylate, Diethylmethacryloylphosphonate, Dipropylmethacryloylphosphate, Ethylsulfinylethyl(meth)acrylate, 4-Thiocyanatobutyl(meth)acrylate, Ethylsulfonylethyl(meth)acrylate, Thiocyanatomethyl(meth)acrylate, Methylsulfinylmethyl(meth)acrylate, Bis(methacryloyloxyethyl)sulfide, Trimethyloylpropantri(meth)acrylate, 1-Hexene, 1-Heptene, Cyclohexene, Vinylcyclohexane, 3,3-Dimethylpropene, 3-Methyl-1-diisobutylene, 4-Methyl-1-pentene, Vinylacetate, Styrole, α-Methylstyrole, α-Ethylstyrole, Vinyltoluole, p-Methylstyrole Ester oder Diester der Maleinsäure, 9-Vinylcarbazole, 3-Vinylcarbazole, 4-Vinylcarbazole, Vinyloxolane, Vinylfurane, Vinylthiophene, Vinylthiolane.

Mindestens eines der Polymere c) besteht zu über 60 Gew.%, besonders bevorzugt zu über 80 Gew.-%, aus (Meth)acrylaten. In einer besonderen Ausführungsform bestehen die Polymere c) jeweils zu über 60 Gew.-%, bevorzugt zu über 80 Gew.-%, aus (Meth)acrylaten.

In einer weiteren bevorzugten Ausführungsform besteht mindestens eines der Polymere c) zu über 60 Gew.-%, besonders bevorzugt zu über 80 Gew.-%, aus Methylmethacrylat.

Üblicherweise bestehen die Polymere c) zu über 60 Gew.-% aus (Meth)acrylaten.

Für eine gute Weiterverarbeitbarkeit kann ein Oligomeres a) und/oder ein Polymeres c) eine oder mehrere funktionelle Gruppen tragen, mit denen Nachvernetzungen erfolgen können. In Frage kommende Funktionelle Gruppen sind z.B. Hydroxyl-, Mercapto-, Amino-, Carboxyl-, Carbonyl-, Sulfonyl-, Epoxy-, β-Keto-ester- und Isocyanatgruppen.

Diese können gegebenenfalls auch geschützt vorliegen, wie z.B. die Isocyanatgruppe durch Reaktion mit z.B. Alkoholen, Phenolen, Oximen, Caprolactamen, Aminen oder C-H-aziden Verbindungen.

Bevorzug sind Hydroxylgruppen.

Die Herstellung der Polymere kann durch Emulsionspolymerisation, Suspensionspolymerisation, Lösungspolymerisation oder Substanzpolymerisation erfolgen. Bevorzugt ist die Herstellung durch Emulsionspolymerisation.

Im Falle der Herstellung durch Emulsionspolymerisation fallen die Polymere in Form von in Wasser dispergierten Polymerpartikeln an. Diese müssen in ein trockenes Pulver überführt werden; dazu eignen sich die üblichen Methoden wie z.B. Koagulation, Sprühtrocknung und Gefriertrocknung. Bevorzugt ist die Sprühtrocknung.

Durch die bevorzugte Herstellung vermittels Emulsionspolymerisation und Sprühtrocknung werden Pulverpartikel mit einem mittleren Partikeldurchmesser von üblicherweise 1-500 µm erzeugt, die aus einzelnen Polymerpartikeln mit mit einem mittleren Partikeldurchmesser von üblicherweise 200-1200 nm zusammengesetzt sind. Solche Pulver sind für die Herstellung der erfindungsgemäßen Formulierungen besonders geeignet.

(Mit 'mittlerer Partikeldurchmesser' wird hier und im folgenden, sofern nicht anders angegeben, der Mittelwert der Teilchengrößenverteilung der Probe in der Volumendarstellung bezeichnet. Gemessen werden können diese Werte zum Beispiel durch Laserbeugung, z.B. mit Hilfe eines Coulter LS 13 320, Hersteller Beckmann-Coulter.)

Durch eine dem Fachmann bekannte Verfahrensweise der Emulsionspolymerisation ist es auch möglich Polymerpartikel herzustellen, die einen Kern und darum herum eine oder mehrere Schalen besitzen, wobei die Polymere die den Kern bzw. die jeweilige Schale bilden alle verschiedene Monomerzusammensetzungen haben können (Kern/Schale-Partikel).

Auf ähnliche Weise können auch Partikel hergestellt werden, deren Monomerzusammensetzung sich vom Zentrum zur Oberfläche des Partikels kontinuierlich ändert, was gewissermaßen einem Kem/Schale-Partikel mit sehr vielen Schalen entspricht. Man spricht in diesem Falle auch von einer Gradientenmorphologie der Partikel oder von 'Gradientenlatices'.

Wie allgemein bekannt ist bestehen Polymere und Oligomere praktisch immer aus Mischungen verschiedener Moleküle, deren Eigenschaften um ein oder mehrere Maxima verteilt sind. Ein Beispiel solcher Eigenschaften ist das Molekulargewicht, das durch Mittelwerte charakterisiert wird, wobei die Molekulargewichte der einzelnen Polymermoleküle in einer - mehr oder weniger breiten und ggf. auch polymodalen - Verteilung um diesen Mittelwert herum vorliegen.

Ein anderes Beispiel betrifft die chemische Zusammensetzung. So entstehen Copolymere (speziell bei der radikalischen Polymerisation) meist durch einen statistischen Einbau der zur Verfügung stehenden Monomere. Ist ein bestimmtes Monomer A beispielsweise zu 2 % in einer Monomermischung vertreten so wird es in ein Oligomer, welches im Mittel aus 50 Monomereinheiten besteht, statistisch einmal pro Oligomer eingebaut. Tatsächlich wird man Oligomere ohne dieses Monomer A ebenso finden wir Oligomere mit 2 und 3 Monomereinheiten dieses Typs, auch wenn Oligomere mit genau einem eingebauten Monomer A in der Mehrzahl sein werden.

Was hiermit ausdrücklich deutlich gemacht werden soll ist, dass beim Einsatz von Polymeren und Oligomeren stets in gewissem Sinne Mischungen zum Einsatz kommen, die jedoch üblicherweise nicht als solche wahrgenommen und bezeichnet werden. (Zum besseren Verständnis und zur Abgrenzung werden solche 'zwangsläufigen' Mischungen in der folgenden Darlegung als Polymermaterial bzw. Oligomermaterial bezeichnet).

Wenn in dieser Schrift von 'Polymeren' und 'Oligomeren' die Rede ist, sind jedoch darüber hinaus ausdrücklich auch Mischungen mehrerer Polymermaterialien oder mehrerer Oligomermaterialien gemeint: So können zum Beispiel zwei oder mehr separat hergestellte Materialien mit verschiedenen Molekulargewichtsverteilungen oder verschiedenen Monomerzusammensetzungen gemischt werden. Weiterhin können als Polymere bzw. Oligomere auch Materialien, die nach verschiedenen Herstellungsverfahren (z.B. ein Emulsionspolymerisat und ein Suspensionspolymerisat) gewonnen wurden, gemischt verwendet werden.

Weiterhin stellen auch durch Emulsionspolymerisation hergestellte Polymerpartikel mit Kern/Schale- oder Gradientenmorphologie Mischungen verschiedener Polymermaterialien dar, da sich diese Strukturierung ja eben durch unterschiedliche Materialien manifestiert.

Die Möglichkeit sowohl die Eigenschaften einzelner Polymer- bzw. Oligomermaterialien nach Wunsch einzustellen, sowie verschiede Materialien zu Mischen gezielt auf alle Anforderungen einer speziefischen Anwendung eingehen zu können.

Der Formulierung können die üblichen Füll-, Hilfs- und/oder Zusatzstoffe zugegeben werden.

Gebräuchliche Füllstoffe sind unter anderen Calciumcarbonat (in unterschiedlichen Varianten, z.B. natürlich oder gefällt, oberflächenbehandelt etc.), Bariumsulfat (Schwerspat) und Silicate, wie z.B. Glimmer, Bentonite, Montmorillonit, Talk oder Vermiculit. Insbesondere bevorzugt wird Bariumsulfat.

Zu den Hilfs- und Zusatzstoffe zählen Farbpigmente, Alterungsschutzmittel, Rheologieadditive, Treibmittel und andere:

Insbesondere für die Schäumung von Plastisolen werden den Formulierungen Treibmittel zugesetzt. Gebräuchliche Treibmittel sind zum Beispiel Azoverbindungen (z.B. Azodicarbamid), N-Nitrosoverbindungen (z.B. Di-Nitrosopentamethylentetramin), Sulfonylhydrazide (z.B. 4,4'-Oxybis(benzolsulfonsäurehydrazid)) oder Sulfonylsemicarbazide (p-Toluolsulfonylsemicarbazide).

Als Farbpigment werden oftmals Ruße eingesetzt.

Gegebenenfalls können Hilfsmittel zur Nachvernetzung zugegeben werden. Solche Hilfsmittel sind in der Regel Verbindungen mit zwei oder mehr funktionellen Gruppen, die mit sich selbst und/oder mit anderen Komponenten der Formulierung Bindungen eingehen. Dazu kann gegebenenfalls die Zugabe eines Starters oder eines Katalysators nötig sein und/oder das Zuführen von Energie, etwa in Form von Wärme, UV-Stahlung, oder anderen.

Als reaktive Komponenten kommen beispielsweise Hydroxyl-, Mercapto-, Amino-, Carboxyl-, Carbonyl-, Sulfonyl-, Epoxy-, β-Keto-ester-, Isocyanat, Vinylgruppen in Frage; bevorzugt sind Isocyanate.

Diese können gegebenenfalls auch geschützt vorliegen, wie z.B. die Isocyanatgruppe durch Reaktion mit z.B. Alkoholen, Phenolen, Oximen, Caprolactamen, Aminen oder C-H-aziden Verbindungen.

Die Formulierungen haben ein breites Anwendungsfeld, und können mit Vorteil überall dort eingesetzt werden wo das Schwingen einer Oberfläche gedämpft werden soll.

Beispiele solcher Anwendungen in privaten Haushalten sind z.B. die Verkleidung von Haushaltgeräten, wie Waschmaschinen, Kühlschränken, Küchenmaschinen und Klimaanlagen. Weiterhin die Verkleidung von Personalcomputern.

Beispiele bei Bau- und Konstruktionsmaterialien sind Rohre, Fußböden und Wandverkleidungen.

Eine Reihe weiterer Anwendungen und Anwendungsbereiche sind ohne weiteres denkbar. Die zu beschichtenden Oberflächen selbst können dabei aus verschiedenen Materialien bestehen, wie z.B. Kunststoff, Holz, Keramik, Pappe, Span- und Holzfaserwerkstoffen. Häufig vorkommende und besonders bevorzugte Oberflächen sind die von Metallblechen.

Insbesondere bevorzugt ist die Beschichtung von Karosserieteilen im Automobilbau. Werden die Beschichtungen außen im Unterboden- und Radkastenbereich des Kraftfahrzeugs eingesetzt, so werden zusätzlich zur Dämpfung der Blechschwingungen auch noch die Aufprallgeräusche von Steinen, Sand und Wasser verringert.

Mit der gleichen Formulierung können auch Hohlräume ausgefüllt werden, wie sie im Automobilbau zum Beispiel in den Dachholmen oder den A-, B- und C-Säulen vorkommen. Oftmals werden für solche Anwendungen schäumbare Formulierungen eingesetzt werden. Neben der Dämpfung der Blechschwingung wird in diesem Falle zusätzlich verhindert, dass die in diesen Hohlräumen eingeschlossenen Luftsäulen zu schwingen beginnen können.

## Patentansprüche

1. Plastisol-Formulierung, enthaltend
a) 1-60 Gew.-% Oligomere mit einem Molekulargewicht kleiner 20000 g/mol, die zu mindestens 30 Gew.-% (Meth)acrylate enthalten
b) 0-60 Gew.-% Lösungsmittel für die Oligomere a),
c) 5-60 Gew.-% pulverförmige Polymere mit einem Molekulargewicht größer 100000 g/mol und dass mindestens eines der Polymere zu über 60 Gew.-% aus (Meth)acrylaten besteht sowie
d) weitere Füll-, Hilfs- und/oder Zusatzstoffe,
wobei die Komponenten a) bis c) mindestens 20% der Formulierung ausmachen.

2. Plastisol-Formulierung gemäß Anspruch 1, **dadurch gekennzeichnet, dass** die Komponenten a) bis c) mindestens 40 Gew.-% der Formulierung ausmachen.

3. Plastisol-Formulierung gemäß Anspruch 1, **dadurch gekennzeichnet, dass** die Oligomere a) mindestens 60 Gew.-% (Meth)acrylate enthalten.

4. Plastisol-Formulierung gemäß Anspruch 1, **dadurch gekennzeichnet, dass** die Oligomere a) jeweils ein Molekulargewicht < 10000 g/mol aufweisen.

5. Plastisol-Formulierung gemäß Anspruch 1, **dadurch gekennzeichnet, dass** die Oligomere a) jeweils ein Molekulargewicht < 5000 g/mol aufweisen.

6. Plastisol-Formulierung gemäß Anspruch 1, **dadurch gekennzeichnet, dass** das oder eines der Oligomere freie Hydroxyl-, Carboxyl- oder Amid-Gruppen enthält.

7. Plastisol-Formulierung gemäß Anspruch 1, **dadurch gekennzeichnet, dass** als Lösungsmittel b) ein Phthalat, Adipat, Phosphat oder Zitrat verwendet wird.

8. Plastisol-Formulierung gemäß Anspruch 1, **dadurch gekennzeichnet, dass** als Lösungsmittel b) bevorzugt ein Phthalat verwendet wird.

9. Plastisol-Formulierung gemäß Anspruch 1, **dadurch gekennzeichnet, dass** die Polymere c) ein Molekulargewicht >400000 g/mol aufweisen.

10. Plastisol-Formulierung gemäß Anspruch 1, **dadurch gekennzeichnet, dass** die Polymere c) jeweils zu über 60 Gew.-% aus (Meth)acrylaten bestehen.

11. Plastisol-Formulierung gemäß Anspruch 1, **dadurch gekennzeichnet, dass** mindestens eines der Polymere c) zu über 80 Gew.-% aus (Meth)acrylaten bestehen.

12. Plastisol-Formulierung gemäß Anspruch 1, **dadurch gekennzeichnet, dass** mindestens eines der Polymere c) zu über 60 Gew.-% aus Methylmethacrylat besteht.

13. Plastisol-Formulierung gemäß Anspruch 1, **dadurch gekennzeichnet, dass** mindestens eines der Polymere c) zu über 80 Gew.-% aus Methylmethacrylat besteht.

14. Plastisol-Formulierung gemäß Anspruch 1, **dadurch gekennzeichnet, dass** die Polymere in Form von Partikeln mit einer Größe von 200 bis 1200 nm vorliegen.

15. Plastisol-Formulierung gemäß Anspruch 1, **dadurch gekennzeichnet, diese** Partikel eine Struktur aufweisen, in der um einen Kern eine oder mehrere Schalen mit gegebenenfalls unterschiedlicher Monomerzusammensetzung vorliegen.

16. Plastisol-Formulierung gemäß Anspruch 1, **dadurch gekennzeichnet, dass** die Oligomere a) und/oder die Polymere c) eine oder mehrere funktionelle Gruppen tragen, mit denen Nachvernetzung erfolgen können.

17. Plastisol-Formulierung gemäß Anspruch 16, **dadurch gekennzeichnet, dass** die funktionellen Gruppen Hydroxylgruppen sind.

18. Plastisol-Formulierung gemäß Anspruch 1, **dadurch gekennzeichnet, dass** durch Zusatz einer reaktiven Komponente die Nachvernetzung erfolgt.

19. Plastisol-Formulierung gemäß Anspruch 18, **dadurch gekennzeichnet, dass** eine der reaktiven Komponenten ein Isocyanat ist.

20. Plastisol-Formulierung gemäß Anspruch 1, **dadurch gekennzeichnet, dass** ein Hilfs-, Füll- oder Zusatzstoff d) ein Treibmittel ist.

21. Verwendung von Plastisol-Formulierungen gemäß einem der Ansprüche 1-20 zur Beschichtung von Oberflächen.

22. Verwendung von Plastisol-Formulierungen gemäß einem der Ansprüche 1-20 zur Beschichtung von Metallblechen.

23. Verwendung von Plastisol-Formulierungen gemäß einem der Ansprüche 1-20 zur Beschichtung von Karosserieteilen im Automobilbau.

24. Verwendung von Plastisol-Formulierungen gemäß einem der Ansprüche 1-20 zur Dämpfung von Blechschwingungen.

25. Verwendung von Plastisol-Formulierungen gemäß einem der Ansprüche 1-20 zum Ausfüllen von Hohlräumen.

## Claims

1. Plastisol formulation, comprising
a) from 1 to 60% by weight of oligomers whose molar mass is smaller than 20 000 g/mol and which contain at least 30% by weight of (meth)acrylates,
b) from 0 to 60% by weight of solvents for the oligomers a),
c) from 5 to 60% by weight of pulverulent polymers whose molar mass is greater than 100 000 g/mol, where at least one of the polymers is composed of more than 60% by weight of (meth)acrylates, and
d) other fillers, auxiliaries and/or additives,
where components a) to c) make up at least 20% of the formulation.

2. Plastisol formulation according to Claim 1, **characterized in that** components a) to c) make up at least 40% by weight of the formulation.

3. Plastisol formulation according to Claim 1, **characterized in that** the oligomers a) contain at least 60% by weight of (meth)acrylates.

4. Plastisol formulation according to Claim 1, **characterized in that** the molar mass of each of the oligomers a) is < 10 000 g/mol.

5. Plastisol formulation according to Claim 1, **characterized in that** the molar mass of each of the oligomers a) is < 5000 g/mol.

6. Plastisol formulation according to Claim 1, **characterized in that** the oligomer or one of the oligomers contains free hydroxy, carboxy, or amide groups.

7. Plastisol formulation according to Claim 1, **characterized in that** a phthalate, adipate, phosphate or citrate is used as solvent b).

8. Plastisol formulation according to Claim 1, **characterized in that** a phthalate is preferably used as solvent b).

9. Plastisol formulation according to Claim 1, **characterized in that** the molar mass of the polymers c) is >400 000 g/mol.

10. Plastisol formulation according to Claim 1, **characterized in that** each of the polymers c) is composed of more than 60% by weight of (meth)acrylates.

11. Plastisol formulation according to Claim 1, **characterized in that** at least one of the polymers c) is composed of more than 80% by weight of (meth)acrylates.

12. Plastisol formulation according to Claim 1, **characterized in that** at least one of the polymers c) is composed of more than 60% by weight of methyl methacrylate.

13. Plastisol formulation according to Claim 1, **characterized in that** at least one of the polymers c) is composed of more than 80% by weight of methyl methacrylate.

14. Plastisol formulation according to Claim 1, **characterized in that** the polymers take the form of particles whose size is from 200 to 1200 nm.

15. Plastisol formulation according to Claim 1, **characterized in that** these particles have a structure in which one or more shells is/are present with, if appropriate, different monomer constitution around a core.

16. Plastisol formulation according to Claim 1, **characterized in that** the oligomers a) and/or the polymers c) bear one or more functional groups which can give post-crosslinking.

17. Plastisol formulation according to Claim 16, **characterized in that** the functional groups are hydroxy groups.

18. Plastisol formulation according to Claim 1, **characterized in that** the post-crosslinking takes place via addition of a reactive component.

19. Plastisol formulation according to Claim 18, **characterized in that** one of the reactive components is an isocyanate.

20. Plastisol formulation according to Claim 1, **characterized in that** an auxiliary, filler or additive d) is a blowing agent.

21. Use of plastisol formulations according to any of Claims 1 to 20 for the coating of surfaces.

22. Use of plastisol formulations according to any of Claims 1 to 20 for the coating of sheet metal.

23. Use of plastisol formulations according to any of Claims 1 to 20 for the coating of bodywork parts in automobile construction.

24. Use of plastisol formulations according to any of Claims 1 to 20 for the damping of vibrations in sheet metal.

25. Use of plastisol formulations according to any of Claims 1 to 20 for the filling of cavities.

## Revendications

1. Formulation de plastisol, contenant
a) 1-60% en poids d'oligomères présentant un poids moléculaire inférieur à 20 000 g/mole, qui contiennent à raison d'au moins 30% en poids de (méth)acrylates
b) 0-60% en poids de solvant pour les oligomères a),
c) 5-60% en poids de polymères sous forme de poudre présentant un poids moléculaire supérieur à 100 000 g/mole et en ce qu'au moins un des polymères est constitué par plus de 60% en poids de (méth)acrylates, ainsi que
d) d'autres charges, adjuvants et/ou additifs,
les composants a) à c) représentant au moins 20% de la formulation.

2. Formulation de plastisol selon la revendication 1, **caractérisée en ce que** les composants a) à c) représentent au moins 40% en poids de la formulation.

3. Formulation de plastisol selon la revendication 1, **caractérisée en ce que** les oligomères a) contiennent au moins 60% en poids (méth)acrylates.

4. Formulation de plastisol selon la revendication 1, **caractérisée en ce que** les oligomères a) présentent à chaque fois un poids moléculaire < 10 000 g/mole.

5. Formulation de plastisol selon la revendication 1, **caractérisée en ce que** les oligomères a) présentent à chaque fois un poids moléculaire < 5000 g/mole.

6. Formulation de plastisol selon la revendication 1, **caractérisée en ce que** l'oligomère ou un des oligomères contient des groupes hydroxyle, carboxyle ou amide libres.

7. Formulation de plastisol selon la revendication 1, **caractérisée en ce qu'**on utilise comme solvant b) un phtalate, un adipate, un phosphate ou un citrate.

8. Formulation de plastisol selon la revendication 1, **caractérisée en ce qu'**on utilise comme solvant b) de préférence un phtalate.

9. Formulation de plastisol selon la revendication 1, **caractérisée en ce que** les polymères c) présentent un poids moléculaire > 400 000 g/mole.

10. Formulation de plastisol selon la revendication 1, **caractérisée en ce que** les polymères c) sont à chaque fois constitués par plus de 60% en poids de (méth)acrylates.

11. Formulation de plastisol selon la revendication 1, **caractérisée en ce qu'**au moins un des polymères c) est constitué par plus de 80% en poids de (méth)acrylates.

12. Formulation de plastisol selon la revendication 1, **caractérisée en ce qu'**au moins un des polymères c) est constitué par plus de 60% en poids de méthacrylate de méthyle.

13. Formulation de plastisol selon la revendication 1, **caractérisée en ce qu'**au moins un des polymères c) est constitué par plus de 80% en poids de méthacrylate de méthyle.

14. Formulation de plastisol selon la revendication 1, **caractérisée en ce que** les polymères se trouvent sous forme de particules présentant une grosseur de 200 à 1200 nm.

15. Formulation de plastisol selon la revendication 1, **caractérisée en ce que** les particules présentent une structure dans laquelle une ou plusieurs coquilles présentant une composition de monomères le cas échéant différente se trouve(nt) autour d'un noyau.

16. Formulation de plastisol selon la revendication 1, **caractérisée en ce que** les oligomères a) et/ou les polymères c) portent un ou plusieurs groupes fonctionnels, avec lesquels on peut réaliser une post-réticulation.

17. Formulation de plastisol selon la revendication 16, **caractérisée en ce que** les groupes fonctionnels sont des groupes hydroxyle.

18. Formulation de plastisol selon la revendication 1, **caractérisée en ce que** la post-réticulation est réalisée par addition d'un composant réactif.

19. Formulation de plastisol selon la revendication 18, **caractérisée en ce qu'**un des composants réactifs est un isocyanate.

20. Formulation de plastisol selon la revendication 1, **caractérisée en ce qu'**un adjuvant, une charge ou un additif d) est un agent gonflant.

21. Utilisation de formulations de plastisol selon l'une quelconque des revendications 1-20 pour le revêtement de surfaces.

22. Utilisation de formulations de plastisol selon l'une quelconque des revendications 1-20 pour le revêtement de tôles métalliques.

23. Utilisation de formulations de plastisol selon l'une quelconque des revendications 1-20 pour le revêtement de pièces de carrosserie dans la construction automobile.

24. Utilisation de formulations de plastisol selon l'une quelconque des revendications 1-20 pour atténuer les vibrations de tôles.

25. Utilisation de formulations de plastisol selon l'une quelconque des revendications 1-20 pour le remplissage d'espaces libres.
